# EUROPÄISCHE PATENTSCHRIFT

(11) **EP 2 704 948 B1**
(45) Veröffentlichungstag und Bekanntmachung des Hinweises auf die Patenterteilung: **01.03.2017**
(21) Anmeldenummer: 12715922.6
(22) Anmeldetag: 13.04.2012
(51) Int. Cl.: B65B 9/213, B65B 9/20, B65B 41/16, B65H 23/188, B65B 51/30, B65B 61/06

(54) **SCHLAUCHBEUTELMASCHINE UND VERFAHREN ZUM BETREIBEN EINER SCHLAUCHBEUTELMASCHINE**
TUBULAR BAG MACHINE AND METHOD FOR OPERATING A TUBULAR BAG MACHINE
MACHINE À FABRIQUER DES SACHETS TUBULAIRES ET PROCÉDÉ POUR FAIRE FONCTIONNER UNE TELLE MACHINE

(30) Priorität: 06.05.2011 DE 102011075379
(43) Veröffentlichungstag der Anmeldung: 12.03.2014
(73) Patentinhaber: Robert Bosch GmbH, 70442 Stuttgart (DE)
(72) Erfinder: SLENDERS, Peter, NL-6026 EC Maarheeze (NL)
(86) Internationale Anmeldenummer: PCT/EP2012/056777
(87) Internationale Veröffentlichungsnummer: WO 2012/152529

(56) Entgegenhaltungen:
- WO-A1-2006/066895
- WO-A1-2008/149637
- US-A- 4 501 109

## Beschreibung

### Stand der Technik

Die Erfindung betrifft eine Schlauchbeutelmaschine sowie ein Verfahren zum Betreiben einer Schlauchbeutelmaschine nach den Oberbegriffen der unabhängigen Ansprüche.

Eine derartige Schlauchbeutelmaschine bzw. ein derartiges Verfahren sind aus der US 4,501,109 bekannt. Mittels der bekannten Schlauchbeutelmaschine lässt sich die Bahnspannung des Packstoffs zu Beginn der Förderung herabsetzen und im Laufe der Förderung auf einen höheren Wert einregeln. Hierzu weist die bekannte Schlauchbeutelmaschine einen Vorzugsmechanismus für den Packstoff auf, der im Bereich einer Bevorratungssektion angeordnet ist und eine Vorzugswalze umfasst, die den Packstoff entsprechend einer gemessenen bzw. ermittelten Bahnspannung des Packstoffs derart fördert, dass die Fördergeschwindigkeit in umgekehrt proportionaler Weise zur Höhe der Bahnspannung erfolgt. Wesentlich dabei ist, dass es bei der bekannten Schlauchbeutelmaschine unmittelbar nach dem Starten der Förderung des Packstoffs mittels Vakuumsaugbänder zu einer Reduktion der Bahnspannung in dem Packstoff unter einen Anfangswert kommt, der erst anschließend durch eine entsprechende Regelung der Abzugswalzen auf einen erhöhten Wert eingeregelt wird.

Mittels einer derartigen Schlauchbeutelmaschine sowie eines derartigen Verfahrens zum Betreiben einer Schlauchbeutelmaschine werden insbesondere Lebensmittel, wie Chips, Ketchup o.ä. in Schlauchbeutelpackungen abgepackt. Eine derartige Schlauchbeutelmaschine weist darüber hinaus eine Schlauchformeinrichtung mit einer Formschulter und einem Formrohr auf, über die eine ebene Packstoffbahn gezogen wird, um daraus einen Packstoffschlauch zu formen. Am Packstoffschlauch werden an zumindest einer Längsseite im Bereich des Formrohrs eine Längssiegelnaht sowie eine obere und eine untere Quersiegelnaht ausgebildet. Zum Transport der Packstoffbahn bzw. des Packstoffschlauches dienen beidseitig des Formrohrs angeordnete Abzugsbänder, die mit Unterdruck betrieben werden, wobei durch den Unterdruck die Packstoffbahn bzw. der Packstoffschlauch an den Abzugsbändern anliegt und durch Antreiben der endlosen Abzugsbänder der entsprechende Vorschub des Packstoffschlauches erzielt wird. Die Packstoffbahn ist in Form einer Vorratsrolle gespeichert, wobei zwischen der Packstoffrolle und der Schlauchformeinrichtung ein Pufferspeicher für eine bestimmte Länge der Packstoffbahn angeordnet ist. Ein derartiger Pufferspeicher dient insbesondere dazu, einen Ausgleich zwischen der kontinuierlich angetriebenen Packstoffrolle und den insbesondere intermittierend arbeitenden Abzugsbänder zu ermöglichen. Der Pufferspeicher weist hierzu mehrere Rollen auf, wovon einige Rollen als sogenannte Tänzerrollen ausgebildet sind, die zur Bildung eines variablen Speichervolumens beweglich angeordnet sind und darüber hinaus von der Federkraft einer Druck- bzw. Spannfeder kraftbeaufschlagt sind, um dafür zu sorgen, dass der im Bereich der Puffereinrichtung befindliche Abschnitt der Packstoffbahn nicht durchhängt bzw. definiert geführt wird.

Für die saubere Führung der Packstoffbahn im Bereich der Schlauchformeinrichtung ist es erforderlich, dass die Packstoffbahn im Bereich der Schlauchformeinrichtung unter einer gewissen Zugspannung steht. Diese Zugspannung ergibt sich bei dem an den Abzugsbändern anliegenden Unterdruck dadurch, dass die Packstoffbahn mittels der Tänzerrollen in Richtung der Abzugsbänder unter Spannung gehalten wird. Problematisch bei einem intermittierenden Betrieb der Schlauchbeutelmaschine ist es, dass es aufgrund der Massenträgheit der Rollen, insbesondere der Tänzerrollen, beim Beginn der Vorschubbewegung der Abzugsbänder zu einem Schlupf zwischen der Oberfläche der Abzugsbänder und der Packstoffbahn kommt, der eine genaue Positionierung der Packstoffbahn im Bereich der Schlauchformeinrichtung erschwert bzw. hierzu zusätzliche Maßnahmen erforderlich macht. Während der eigentlichen Vorschubbewegung nimmt aufgrund der sich bewegenden Rollen im Bereich der Puffereinrichtung die Zugspannung ab, so dass der Schlupf zwischen der Packstoffbahn und den Abzugsbändern minimiert bzw. nicht mehr vorhanden ist. Auf der anderen Seite ist zur genauen Führung der Packstoffbahn im Bereich der Schlauchformeinrichtung eine bestimmte Mindestspannung der Packstoffbahn erforderlich, die nicht unterschritten werden sollte. Das Unterschreiten der Mindestspannung ist bei der eingangs erwähnten Schlauchbeutelmaschine nicht ausgeschlossen.

### Offenbarung der Erfindung

Ausgehend von dem dargestellten Stand der Technik liegt der Erfindung die Aufgabe zugrunde, eine Schlauchbeutelmaschine bzw. ein Verfahren zum Betreiben einer Schlauchbeutelmaschine nach den Oberbegriffen der unabhängigen Ansprüche derart weiterzubilden, dass beim intermittierenden Betrieb der Schlauchbeutelmaschine eine definierte Führung der Packstoffbahn im Bereich der Schlauchformeinrichtung erzielt werden kann. Diese Aufgabe wird bei einer Schlauchbeutelmaschine bzw. einem Verfahren zum Betreiben einer Schlauchbeutelmaschine mit den Merkmalen der beiden unabhängigen Ansprüche gelöst.

Vorteilhafte Weiterbildungen der erfindungsgemäßen Schlauchbeutelmaschine sowie des Verfahrens zum Betreiben einer Schlauchbeutelmaschine sind in den jeweiligen Unteransprüchen angegeben.

In einer besonders bevorzugten Ausgestaltung der Erfindung ist es vorgesehen, dass mehrere Tänzerrollen vorgesehen sind, die mittels eines Gestells mit dem Stellkolben gekoppelt sind. Dadurch wird zum einen bei relativ kompaktem Aufbau der Puffereinrichtung ein relativ hohes Speichervolumen in der Puffereinrichtung durch die Verwendung der mehreren Tänzerrollen erzielt, und zum anderen ist es lediglich erforderlich, einen einzigen Stellkolben vorzusehen, der gemeinsam auf die Tänzerrollen einwirkt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Teil einer erfindungsgemäßen Schlauchbeutelmaschine in einer vereinfachten Vorderansicht und
- Fig. 2: die Schlauchbeutelmaschine gemäß Fig. 1 in einer ebenfalls vereinfachten Seitenansicht.

Gleiche Bauteile bzw. Bauteile mit gleicher Funktion sind in den Figuren mit den gleichen Bezugsziffern versehen.

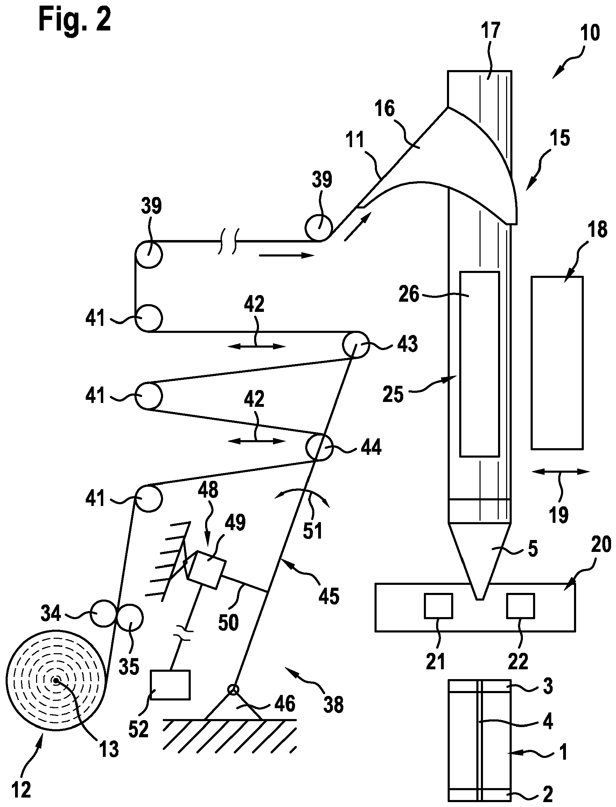

In den Figuren ist eine erfindungsgemäße Schlauchbeutelmaschine 10 zum Herstellen von insbesondere mit einem Lebensmittel befüllten Schlauchbeutelpackungen 1 dargestellt. Die Schlauchbeutelpackungen 1 (Fig. 2) weisen dabei jeweils eine untere Quersiegelnaht 2, eine obere Quersiegelnaht 3 sowie wenigstens eine Längssiegelnaht 4 auf. Die Schlauchbeutelpackungen 1 werden aus einer aus heißsiegelfähigem Material bestehenden Packstoffbahn 11 geformt, die in Form einer Vorratsrolle 12 auf einer Achse 13 bevorratet ist.

Die Schlauchbeutelmaschine 10 weist eine Schlauchformeinrichtung 15 auf, die aus einer Formschulter 16 und einem mit der Formschulter 16 verbundenen, im Querschnitt insbesondere rund ausgebildeten Formrohr 17 besteht. Zum Bilden eines Packstoffschlauches 5 aus der ebenen Packstoffbahn 11 wird die Packstoffbahn 11 über die Formschulter 16 gezogen und um das Formrohr 17 gelegt, wobei einander in Längsrichtung überlappende Randbereiche der Packstoffbahn 11 die Längssiegelnaht 4 ausbilden. Diese Längssiegelnaht 4 wird mittels einer Längsnahtsiegeleinrichtung 18 ausgebildet, die in Richtung des Doppelpfeils 19 hin- und herbewegbar angeordnet ist. Die beiden Quersiegelnähte 2, 3 werden mit einer im Wesentlichen unterhalb des Formrohrs 17 angeordneten Quernahtsiegel- und Trenneinrichtung 20 ausgebildet, die zwei gegeneinander verfahrbare Quernahtsiegelbacken 21, 22 sowie eine nicht dargestellte Trenneinrichtung zum Abtrennen der jeweiligen Schlauchbeutelpackungen 1 von dem Packstoffschlauch 5 umfasst.

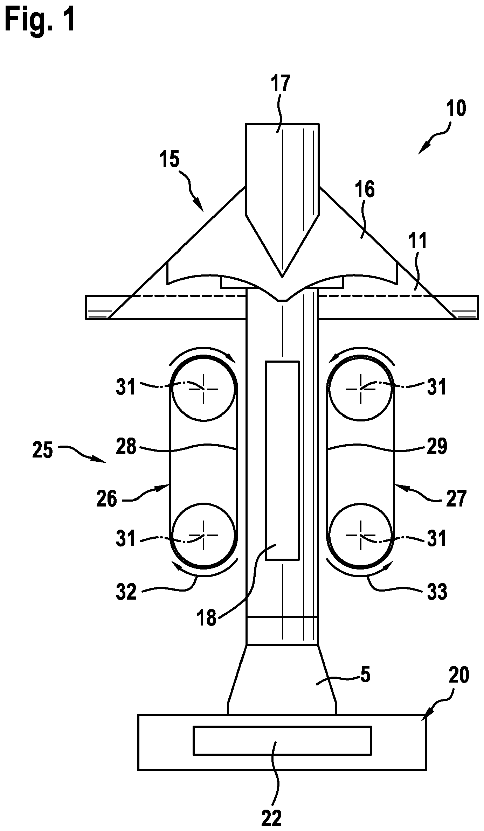

Der Packstoffschlauch 5 wird im Bereich des Formrohrs 17 mittels einer Abzugseinrichtung 25 gefördert. Die Abzugseinrichtung 25 umfasst, wie insbesondere anhand der Fig. 1 erkennbar ist, zwei auf gegenüberliegenden Seiten des Formrohrs 17 in Höhe der Längsnahtsiegeleinrichtung 18 angeordnete, endlos umlaufende Vakuumsaugbänder 26, 27.

Hierbei sind in den jeweiligen Trumen 28, 29 der Vakuumsaugbänder 26, 27 nicht dargestellte Saugöffnungen ausgebildet, die mit einer ebenfalls nicht dargestellten Unterdruck- bzw. Vakuumquelle verbunden sind. Zum Fördern des Packstoffschlauchs 5 bzw. zum Transport der Packstoffbahn 11 in den Bereich der Schlauchformeinrichtung 15 werden die angesprochenen Saugöffnungen mit Unterdruck beaufschlagt, wobei die Packstoffbahn 11 an die Trume 28, 29 gezogen wird. Die Vakuumsaugbänder 26, 27 weisen nicht dargestellte Antriebe, insbesondere Schrittmotoren auf, die die Vakuumsaugbänder 26, 27, die in horizontal angeordneten Drehachsen 31 gelagert sind, in Richtung der Pfeile 32, 33 bewegen.

Die Abzugseinrichtung 25 bzw. die Vakuumsaugbänder 26, 27 werden vorzugsweise intermittierend betrieben, wobei der jeweilige Unterdruck bzw. das jeweilige Vakuum an den Vakuumsaugbändern 26, 27 vorzugsweise während des gesamten Betriebs der Schlauchbeutelmaschine 10 aufrecht erhalten wird. Der intermittierende Betrieb wird somit alleine über einen Antrieb der Vakuumsaugbänder 26, 27 realisiert.

Die Packstoffbahn 11 wird beispielhaft zunächst mittels zweier Abzugswalzen 34, 35 kontinuierlich von der Vorratsrolle 12 abgespult. An die Abzugswalzen 34, 35 schließt sich in Richtung der Schlauchformeinrichtung 15 eine Puffereinrichtung 38 an, die zum Ausgleich der intermittierenden Bewegung des Packstoffschlauches 5 im Bereich der Schlauchformeinrichtung 15 und der kontinuierlichen Abzugsbewegung durch die Abzugswalzen 34, 35 dient. Von der Puffereinrichtung 38 wird die Packstoffbahn 11 über mehrere Umlenkwalzen 39 schließlich der Schlauchformeinrichtung 15 zugeführt.

Die Puffereinrichtung 38 weist im Ausführungsbeispiel drei ortsfest angeordnete Walzen 41, sowie zwei in Richtung der Doppelpfeile 42 beweglich gelagerte Tänzerrollen 43, 44 auf. Je nach Stellung der Tänzerrollen 43, 44 wird in dem Bereich der Puffereinrichtung 38 ein mehr oder minder großer Abschnitt der Packstoffbahn 11 zwischengespeichert. Die Tänzerrollen 43, 44 dienen dazu, dass die Packstoffbahn 11 im Bereich der Puffereinrichtung 38 in zueinander parallelen Bahnabschnitten angeordnet ist, so dass insbesondere die Bildung von Falten in der Puffereinrichtung 38 vermieden wird. Hierzu ist es erforderlich, dass die Tänzerwalzen 43, 44 die Packstoffbahn 11 innerhalb der Puffereinrichtung 38 stets unter Zugspannung halten. Hierzu ist es vorgesehen, dass die beiden Tänzerwalzen 43, 44 mittels eines gemeinsamen Gestells 45 miteinander verbunden sind. Das den Tänzerwalzen 43, 44 abgewandte Ende des Gestells 45 ist in einem ersten, ortsfest angeordneten Lager 46 schwenkbar gelagert. Das Gestell 45 ist in Wirkverbindung mit einer Spanneinrichtung 48 angeordnet.

Die Spanneinrichtung 48 umfasst einen Pneumatikzylinder 49, der beispielsweise ortsfest angeordnet ist. Der Pneumatikzylinder 49 wirkt mit einem Stellkolben 50 zusammen, der wiederum mit dem Gestell 45 verbunden ist. Die Spanneinrichtung 48 bzw. der Pneumatikzylinder 49 erzeugt eine Druckkraft, die das Gestell 45 in Richtung des Pfeils 51 mit einer Kraft beaufschlagt, die auf die Tänzerwalzen 43, 44 wirkt, und die zu einem Spannen der Packstoffbahn 11 im Bereich der Puffereinrichtung 38 führt. Die Ansteuerung des Pneumatikzylinders 49 erfolgt mittels einer Ventileinrichtung 52, die insbesondere zwei Schaltstellungen aufweist, die entweder eine relativ niedrige Kraft oder eine relativ hohe Kraft in Richtung des Pfeils 51 auf den Stellkolben 50 und somit auf die beiden Tänzerwalzen 43, 44 erzeugen. Die Ventileinrichtung 52 wird insbesondere von der Steuereinrichtung der Schlauchbeutelmaschine 10 angesteuert, wobei diese gleichzeitig unter anderem für die Ansteuerung der Abzugseinrichtung 25 bzw. der Vakuumsaugbänder 26, 27 dient.

Erfindungsgemäß ist es vorgesehen, dass die mittels der Tänzerwalzen 43, 44 auf die Packstoffbahn 1 erzeugte Zugspannung, die zumindest teilweise bis in den Bereich der Schlauchformeinrichtung 15 wirkt, mittels der Spanneinrichtung 48 veränderbar ist. Hierbei ist es wesentlich, dass bei einem intermittierenden Betrieb der Abzugseinrichtung 25 bzw. bei einem intermittierenden Vorzug des Packstoffschlauchs 5 im Bereich des Formrohrs 17 in dem Augenblick, in dem die Vakuumsaugbänder 26, 27 angetrieben werden und somit die Abzugsbewegung startet, die angesprochen relativ niedrige Kraft auf die Tänzerwalzen 43, 44 erzeugt wird. Dies erfolgt durch eine entsprechende Stellung der Ventileinrichtung 52. Durch die relativ geringe Kraft wird auch eine relativ geringe Zugspannung auf die Packstoffbahn 11 erzeugt, die den Schlupf zwischen der Packstoffbahn 11 und den Vakuumsaugbändern 26, 27 im Augenblick des Anfahrens der Vakuumsaugbänder 26, 27 verringert bzw. vollständig vermeidet. Während der eigentlichen Vorschubbewegung der Packstoffbahn 11 im Bereich der Schlauchformeinrichtung 15 ist hingegen eine relativ große Zugspannung in der Packstoffbahn 11 erwünscht, um eine exakte Führung der Packstoffbahn 11 und somit, insbesondere genaue, geometrische Abmessungen der Schlauchbeutelpackungen 1 erzeugen zu können. Hierzu ist es erfindungsgemäß vorgesehen, dass nach der Anlaufphase der Vakuumsaugbänder 26, 27 die Ventileinrichtung 52 in ihre zweite Schaltstellung geschaltet wird, in der der Pneumatikzylinder 49 über den Stellkolben 50 und das Gestell 45 die erhöhte Spann- und somit Zugkraft auf die Packstoffbahn 11 erzeugt.

Die soweit beschriebene Schlauchbeutelmaschine 10 kann in vielfältiger Art und Weise abgewandelt bzw. modifiziert werden, ohne vom Erfindungsgedanken abzuweichen. So ist es beispielsweise denkbar, dass die Spanneinrichtung 48 bzw. die Ventileinrichtung 52 den Pneumatikzylinder 49 mit einer variablen Kraft ansteuert, so dass nicht nur zwei Schaltzustände bzw. Zugkräfte auf die Packstoffbahn 11 erzeugt werden können, sondern beispielsweise eine während des Betriebs der Vakuumsaugbänder 26, 27 veränderliche Zugspannung, insbesondere eine an- und abschwellende Zugspannung, die jeweils exakt an die augenblickliche Fördergeschwindigkeit der Packstoffbahn 11 angepasst ist. Darüber hinaus ist es auch denkbar, die Schlauchbeutelmaschine 10 kontinuierlich anzutreiben, und die Spanneinrichtung 48 insbesondere der Anpassung an unterschiedliche Schlauchbeutelformate bzw. Packstoffmaterialien zu verwenden.

## Patentansprüche

1. Schlauchbeutelmaschine (10), mit einer Schlauchformeinrichtung (15), bestehend aus einer Formschulter (16) und einem Formrohr (17) zum Formen eines Packstoffschlauches (5) aus wenigstens einer Packstoffbahn (11), einer vakuumunterstützten Abzugseinrichtung (25) in Form von endlos umlaufenden Bändern (26, 27) im Bereich des Formrohres (17), einer Vorratsrolle (12) zur Bevorratung der Packstoffbahn (11), wobei eine Teillänge der Packstoffbahn (11) in einer Puffereinrichtung (38) zwischen der Vorratsrolle (12) und dem Formrohr (17) zwischengespeichert ist, wobei die Puffereinrichtung (38) wenigstens eine mittels einer Spanneinrichtung (48) kraftbeaufschlagte Tänzerrolle (43, 44) aufweist, die die Packstoffbahn (11) im Bereich der Puffereinrichtung (38) mit einer Zugspannung beaufschlagt, die zumindest teilweise bis in den Bereich der Abzugseinrichtung (25) wirkt, wobei die Kraftbeaufschlagung der wenigstens einen Tänzerrolle (43, 44) durch die Spanneinrichtung (48) in Abhängigkeit vom Betriebszustand der Abzugseinrichtung (25) veränderbar ist, und wobei die Spanneinrichtung (48) wenigstens ein Stellelement (49) aufweist, dessen auf die wenigstens eine Tänzerrolle (43, 44) wirkende Stellkraft veränderbar ist,
**dadurch gekennzeichnet,**
**dass** das Stellelement (49) einen pneumatisch betriebenen Stellkolben (50) aufweist, der zumindest mittelbar mit der wenigstens einen Tänzerrolle (43, 44) verbunden ist, und dass die Stellkraft des Stellkolbens (50) mittels einer Ventileinrichtung (52) zwischen zwei Schaltstellungen, die eine hohe und eine niedrige Stellkraft erzeugen, veränderbar ist.

2. Schlauchbeutelmaschine nach Anspruch 1,
**dadurch gekennzeichnet,**
**dass** die Abzugseinrichtung (25) zwei intermittierend angetriebene Vakuumsaugbänder (26, 27) aufweist, die an gegenüberliegenden Seiten des Formrohrs (17) angeordnet sind, und die die Packstoffbahn (11) durch Anlegen von Unterdruck an die Packstoffbahn (11) fördern.

3. Schlauchbeutelmaschine nach Anspruch 1 oder 2,
**dadurch gekennzeichnet,**
**dass** mehrere Tänzerrollen (43, 44) vorgesehen sind, die mittels eines Gestells (45) mit dem Stellkolben (50) gekoppelt sind.

4. Verfahren zum Betreiben einer Schlauchbeutelmaschine (10), insbesondere nach einem der Ansprüche 1 bis 3, bei dem wenigstens eine Packstoffbahn (11) zur Bildung eines Packstoffschlauches (5) über eine Schlauchformeinrichtung (15) gezogen wird, wobei die Zugbewegung mittels vakuumunterstützten Bänder (26, 27) erfolgt, wobei zwischen einer die Packstoffbahn (11) bevorratenden Vorratsrolle (12) und der Schlauchformeinrichtung (15) eine Puffereinrichtung (38) zur Zwischenspeicherung einer Teillänge der Packstoffbahn (11) angeordnet ist, die wenigstens eine kraftbeaufschlagte Tänzerrolle (43, 44) aufweist, so dass die Packstoffbahn (11) zwischen der Puffereinrichtung (38) und den Bändern (26, 27) unter mechanischer Zugspannung steht, wobei die Zugspannung in Abhängigkeit des Betriebszustands der Bänder (26, 27) verändert wird, und wobei die Bänder (26, 27) die Packstoffbahn (11) intermittierend fördern,
**dadurch gekennzeichnet,**
**dass** zum Starten der Abzugsbewegung der Packstoffbahn (11) die Zugspannung in der Packstoffbahn (11) zunächst reduziert ist und anschließend bei der Bewegung der Packstoffbahn (11) erhöht wird, und dass die Zugspannung auf die Packstoffbahn (11) zwischen zwei Werten verändert wird.

5. Verfahren nach Anspruch 4,
**dadurch gekennzeichnet,**
**dass** die Zugspannung im Bereich der Puffereinrichtung (38) verändert wird.

## Claims

1. Tubular bag machine (10) having a flexible-tube-forming device (15), comprising a forming shoulder (16) and a forming tube (17) for forming a flexible packaging-material tube (5) from at least one packaging-material web (11), and having a vacuum-assisted drawing-off device (25) in the form of endlessly circulating belts (26, 27) in the region of the forming tube (17), and having a supply roll (12) for supplying the packaging-material web (11), wherein a sub-length of the packaging-material web (11) is stored on an interim basis in a buffer device (38) between the supply roll (12) and the forming tube (17), wherein the buffer device (38) has at least one compensating roller (43, 44), which is force-activated by means of a tensioning device (48) and subjects the packaging-material web (11) in the region of the buffer device (38) to tensile stressing, the action of which extends, at least in part, into the region of the drawing-off device (25), wherein the force activation of the at least one compensating roller (43, 44) can be altered by the tensioning device (48) in dependence on the operating state of the drawing-off device (25), and wherein the tensioning device (48) has at least one adjustment element (49), of which the adjustment force which acts on the at least one compensating roller (43, 44) can be altered,
**characterized**
**in that** the adjustment element (49) has a pneumatically operated adjustment piston (50), which is connected, at least indirectly, to the at least one compensating roller (43, 44), and in that the adjustment force of the adjustment piston (50) can be altered, by means of a valve device (52), between two switching positions, which generate a high adjustment force and a low adjustment force.

2. Tubular bag machine according to Claim 1,
**characterized**
**in that** the drawing-off device (25) has two intermittently driven vacuum suction belts (26, 27), which are arranged on opposite sides of the forming tube (17) and which convey the packaging-material web (11) by applying negative-pressure to the packaging-material web (11).

3. Tubular bag machine according to Claim 1 or 2,
**characterized**
**by** the provision of a plurality of compensating rollers (43, 44), which are coupled to the adjustment piston (50) by means of a framework (45).

4. Method of operating a tubular bag machine (10), in particular according to one of Claims 1 to 3, in the case of which at least one packaging-material web (11) is drawn over a flexible-tube-forming device (15) for the purpose of forming a flexible packaging-material tube (5), wherein the drawing movement is achieved by means of vacuum-assisted belts (26, 27), wherein a supply roll (12), which supplies the packaging-material web (11), and the flexible-tube-forming device (15) have arranged between them a buffer device (38), which is intended for storing a sub-length of the packaging-material web (11) on an interim basis and has at least one force-activated compensating roller (43, 44), the packaging-material web (11) therefore being subjected to mechanical tensile stressing between the buffer device (38) and the belts (26, 27), wherein the tensile stressing is altered in dependence on the operating state of the belts (26, 27), and wherein the belts (26, 27) convey the packaging-material web (11) intermittently,
**characterized**
**in that**, with the purpose of starting the drawing-off movement of the packaging-material web (11), the tensile stressing in the packaging-material web (11) is in the first instance reduced and then, as the packaging-material web (11) moves, is increased, and in that the tensile stressing to which the packaging-material web (11) is subjected is altered between two values.

5. Method according to Claim 4,
**characterized**
**in that** the tensile stressing is altered in the region of the buffer device (38).

## Revendications

1. Machine à fabriquer des sachets tubulaires (10), avec un dispositif de façonnage tubulaire (15) composé d'un épaulement de façonnage (16) et d'un tube de façonnage (17) pour façonner un tube de matière d'emballage (5) à partir d'au moins une bande de matière d'emballage (11), d'un dispositif d'extraction (25) avec assistance à vide sous la forme de tapis (26, 27) avançant sans fin dans la région du tube de façonnage (17), d'un rouleau de stockage (12) pour stocker la bande de matière d'emballage (11), une longueur partielle de la bande de matière d'emballage (11) étant accumulée temporairement dans un dispositif tampon (38) entre le rouleau de stockage (12) et le tube de façonnage (17), le dispositif tampon (38) comportant au moins un rouleau pantin (43, 44) alimenté en force à l'aide d'un dispositif de tension (48), ledit rouleau alimentant la bande de matière d'emballage (11) dans la région du dispositif tampon (38) avec une tension de traction, cette tension agissant au moins en partie jusque dans la région du dispositif d'extraction (25), l'application de force de l'au moins un rouleau pantin (43, 44) à travers le dispositif de tension (48) pouvant varier en fonction de l'état de fonctionnement du dispositif d'extraction (25) et le dispositif de tension (48) comportant au moins un élément de positionnement (49) dont la force de positionnement agissant sur l'au moins un rouleau pantin (43, 44) peut varier, **caractérisée en ce que** l'élément de positionnement (49) comporte un piston de positionnement (50) entraîné de façon pneumatique relié au moins de façon indirecte à l'au moins un rouleau pantin (43, 44) et que la force de positionnement du piston de positionnement (50) peut varier au moyen d'un dispositif de soupape (52) entre deux positions commutables produisant une force de positionnement élevée et faible.

2. Machine à fabriquer des sachets tubulaires selon la revendication 1, **caractérisée en ce que** le dispositif d'extraction (25) comporte deux tapis d'aspiration à vide (26, 27) entraînés de façon intermittente disposés au niveau des côtés opposés du tube de façonnage (17) et extrayant la bande de matière d'emballage (11) par application d'une sous-pression au niveau de la bande de matière d'emballage (11).

3. Machine à fabriquer des sachets tubulaires selon la revendication 1 ou 2, **caractérisée en ce que** plusieurs rouleaux pantins (43, 44) sont prévus, ceux-ci étant couplés au piston de positionnement (50) à l'aide d'une armature (45).

4. Procédé pour faire fonctionner une machine à fabriquer des sachets tubulaires (10), notamment selon l'une quelconque des revendications 1 à 3, dans lequel au moins une bande de matière d'emballage (11) est tirée via un dispositif de façonnage tubulaire (15) pour la formation d'un tube de matière d'emballage (5), le mouvement de traction se produisant par le biais de tapis (26, 27) avec assistance à vide, un dispositif tampon (38) étant disposé entre un rouleau de stockage (12) stockant la bande de matière d'emballage (11) et le dispositif de façonnage tubulaire (15) pour stocker temporairement une longueur partielle de la bande de matière d'emballage (11), ledit dispositif tampon comportant l'au moins un rouleau pantin (43, 44) alimenté en force, de sorte que la bande de matière d'emballage (11) est sous tension de traction mécanique entre le dispositif tampon (38) et le tapis (26, 27), la tension de traction variant en fonction de l'état de fonctionnement des tapis (26, 27) et les tapis (26, 27) extrayant la bande de matière d'emballage (11) de façon intermittente, **caractérisé en ce que** pour démarrer le mouvement d'extraction de la bande de matière d'emballage (11), la tension de traction est d'abord réduite dans la bande de matière d'emballage (11) puis accrue lors du mouvement de la bande de matière d'emballage (11) et que la tension de traction sur la bande de matière d'emballage (11) varie entre deux valeurs.

5. Procédé selon la revendication 4, **caractérisé en ce que** la tension de traction varie dans la région du dispositif tampon (38).
